# EUROPÄISCHE PATENTSCHRIFT

(11) **EP 3 841 058 B1**
(45) Veröffentlichungstag und Bekanntmachung des Hinweises auf die Patenterteilung: **14.01.2026**
(21) Anmeldenummer: 20707392.5
(22) Anmeldetag: 25.02.2020
(51) Int. Cl.: C01B 3/22, C01B 3/50, F28D 7/00, F28D 7/16, F28D 21/00, F28F 9/22, B01D 1/04

(54) **VERFAHREN ZUM BEREITSSTELLEN VON WASSERSTOFF**
PROCESS FOR PRODUCING HYDROGEN
PROCÉDÉ PERMETTANT DE PRODUIRE DE L'HYDROGÈNE

(30) Priorität: 27.02.2019 DE 102019202657
(43) Veröffentlichungstag der Anmeldung: 30.06.2021
(73) Patentinhaber: HYDROGENIOUS LOHC TECHNOLOGIES GMBH, 91058 Erlangen (DE)
(72) Erfinder: Paetz, Caspar, 91054 Erlangen (DE); Westerath, Federico, 90518 Altdorf (DE); Sander, Sebastian, 92318 Neumarkt i. d. OPf. (DE); Büch, Holger, 91056 Erlangen (DE)
(74) Vertreter: Rau, Schneck & Hübner Patentanwälte Rechtsanwälte PartGmbB
(86) Internationale Anmeldenummer: PCT/EP2020/054867
(87) Internationale Veröffentlichungsnummer: WO 2020/173922

(56) Entgegenhaltungen:
- EP-A2- 1 045 215
- WO-A1-2008/055804
- DE-A1- 102008 020 946
- DE-A1- 102014 006 430
- DE-A1- 102017 201 454

## Beschreibung

Die vorliegende Patentanmeldung nimmt die Priorität der deutschen Patentanmeldung DE 10 2019 202 657.5 in Anspruch.

Die Erfindung betrifft ein Verfahren zum Bereitstellen von Wasserstoff.

In chemischen Prozessen, wie beispielsweise bei der Dehydrierung eines Wasserstoffträgermediums, treten Mediengemische auf, die mehrere Medien, insbesondere verschiedene Medien und/oder Medien in verschiedenen Aggregatzuständen, aufweisen. Für die Handhabung und die weitere Verwendung der Medien ist es erforderlich, die Medium in dem Mediengemisch zu trennen.

WO2008/055 804 A1 offenbart ein Verfahren und eine Vorrichtung zur Gasreinigung durch partielle Kondensation.

EP 1 045 215 A2 offenbart ein Verfahren und eine Vorrichtung zur Kühlung eines Gasstroms.

DE 10 2008 029 046 A1 offenbart einen multifunktionalen Hochleistungs-Rohrbündelkondensator.

DE 10 2017 201 454 A1 offenbart eine Vorrichtung und ein Verfahren zum Bereitstellen von Wasserstoffgas.

DE 10 2014 006 430 A1 offenbart ein Verfahren zur Energieversorgung, insbesondere netzferner oder mobiler Verbraucher.

Aus US 5,180,560 A ist eine Vorrichtung zur Dehydrierung von flüssigen Hydriden bekannt.

JP 2017-081793 A offenbart ein Dehydriersystem mit einem Wärmetauscher.

US 5,180,560 A offenbart einen Apparat zur Dehydrierung von schlüssigen Hydriden.

JP 2016-000678 A offenbart eine Vorrichtung zur Bereitstellung von Wasserstoffgas.

Nakayama, Jo, et al.: "Thermal hazard analysis of a dehydrogenation system involving methylcyclohexane and toluene", Journal of Thermal Analysis and Calorimetry (2018) 133:805-812 offenbart ein System zur Dehydrierung von Methylcyclohexan und Toluol.

Der Erfindung liegt die Aufgabe zugrunde, das Trennen eines Mediengemischs effizienter durchzuführen, so dass insbesondere eine Trennung unter wirtschaftlich relevanten Bedingungen möglich ist.

Die Aufgabe wird durch die Merkmale des Anspruches 1 gelöst. Der Kern der Erfindung besteht darin, dass zum Trennen eines Mediengemischs auch eine Wärmeübertragung stattfindet. Insbesondere findet eine Wärmeübertragung von dem Mediengemisch auf ein Wärmetauschermedium statt. Erfindungsgemäß wurde gefunden, dass dadurch die Trennung der Medien in dem Mediengemisch besser möglich ist. Das Mediengemisch weist ein erstes Medium und ein zweites Medium auf. Das erste Medium ist Wasserstoffgas. Das zweite Medium ist zumindest teilweise dampfförmig. Dampfförmig bedeutet insbesondere, dass das zweite Medium eine verdampfte Flüssigkeit ist, die durch Kondensation zu der Flüssigkeit kondensieren kann. Das zweite Medium ist ein Wasserstoffträgermedium, insbesondere ein flüssiges organisches Wasserstoffträgermedium, das auch als Liquid Organic Hydrogen Carrier (LOHC) bezeichnet wird. Das zweite Medium umfasst insbesondere LOHC-Dampf und/oder mitgeführte LOHC-Tröpfchen. Insbesondere kann LOHC reversibel mit Wasserstoff beladen und von Wasserstoff wieder entladen werden. Die physikochemischen Eigenschaften des LOHC haben hohe Ähnlichkeit zu herkömmlichen flüssigen Kraftstoffen, sodass Pumpen und Tankfahrzeuge zum Transport und Behälter zur Lagerung von LOHC aus dem Bereich der Kraftstoff- und Brennstofflogistik genutzt werden können. Die Wasserstoffspeicherung in chemisch gebundener Form in einer organischen Flüssigkeit erlaubt eine drucklose Lagerung bei Normalbedingungen über große Zeiträume ohne signifikanten Wasserstoffverlust. Als LOHC sind aromatische Verbindungen mit mindestens einem π-Elektronensystem bekannt, die in einer katalytischen Hydrierung in die jeweiligen gesättigten, alizyklischen Verbindungen überführt werden. Als LOHC dient Dibenzyltoluol und Benzyltoluol als Reinstoffe, isomere Gemische oder Mischungen dieser Substanzen miteinander. Für die Freisetzung des Wasserstoffs erfolgt ein Dehydrieren des Wasserstoffträgermediums, also LOHC, unter Zuführung von Wärme und in Gegenwart eines Katalysators, wobei das LOHC in die entladene Form überführt wird. Bei der Entladung des LOHC wird Wasserstoff durch eine katalysierte Dehydrierreaktion aus einem organischen Molekül oder aus einer Mischung organischer Moleküle freigesetzt. Das bedeutet, dass die Freisetzung des Wasserstoffs durch eine stoffliche Umwandlung des zumindest teilweise beladenen Wasserstoffträgermediums in einem Reaktionsbehälter mittels katalysierter Dehydrierreaktion erfolgt.

Das Wärmetauschermedium ist ein Wasserstoffträgermedium, insbesondere ein flüssiges organisches Wasserstoffträgermedium (LOHC).

Insbesondere ist das Wasserstoffträgermedium, das für das zweite Medium und für das Wärmetauschermedium verwendet wird, identisch. Identisch bedeutet, dass das jeweils verwendete Stoffsystem für das zweite Medium und für das Wärmetauschermedium identisch ist. Identisch bedeutet, dass das zweite Medium ein Wasserstoffträgermedium in einem zumindest teilweise entladenen Zustand ist, das durch Beladen, also durch Hydrieren, in ein Wasserstoffträgermedium in einem zumindest teilweise beladenen Zustand überführt werden kann. In diesem zumindest teilweise beladenen Zustand ist das Wasserstoffträgermedium das Wärmetauschermedium. Identisch bedeutet auch, dass insbesondere der Beladegrad, der auch als Hydriergrad bezeichnet wird, des Wasserstoffträgermediums für das zweite Medium und für das Wärmetauschermedium unterschiedlich sein kann.

Das zweite Medium ist zumindest teilweise entladenes Wasserstoffträgermedium (LOHC⁻). Der Beladegrad des zumindest teilweise entladenen Wasserstoffträgermediums beträgt insbesondere höchstens 50 %, insbesondere höchstens 40 %, insbesondere höchstens 30 %, insbesondere höchstens 20 % und insbesondere höchstens 10 %.

Das Wärmetauschermedium ist zumindest teilweise beladenes Wasserstoffträgermedium (LOHC⁺). Der Beladegrad des zumindest teilweise beladenen Wasserstoffträgermediums (LOHC⁺) beträgt mindestens 50 %, insbesondere mindestens 60 %, insbesondere mindestens 70 %, insbesondere mindestens 80 % und insbesondere mindestens 90 %. Das Wärmeträgermedium ist insbesondere flüssig.

Das Mediengemisch und das Wärmetauschermedium werden einem ersten Wärmetauscherabschnitt eines Trennapparats zugeführt. Die Wärme wird von dem Mediengemisch auf das Wärmetauschermedium übertragen. Dadurch wird das Wärmetauschermedium erwärmt und das erste Medium abgekühlt. Das zweite Medium kann durch die Wärmeübertragung abkühlen und dadurch zumindest teilweise kondensieren. Die Wärmeübertragung von dem Mediengemisch auf das Wärmetauschermedium findet insbesondere in dem Trennapparat statt. Insbesondere findet das zumindest teilweise Kondensieren des zweiten Mediums in dem Trennapparat statt. Insbesondere findet in dem Trennapparat ein vollständiges Kondensieren des zweiten Mediums statt. Insbesondere kann das Kondensat abgekühlt werden. Das erste Medium wird, nachdem das zweite Medium abgetrennt ist, insbesondere aus dem Trennapparat abgeführt. Das Abtrennen des kondensierten zweiten Mediums von dem ersten gasförmigen Medium erfolgt in den Trennapparat.

Das kondensierte zweite Medium und das erste gasförmige Medium werden getrennt voneinander aus dem Trennapparat abgeführt. Das Abtrennen des Wasserstoffgases von dem kondensierten Wasserstoffträgermedium in dem Trennapparat kann zuverlässig durchgeführt werden. Die voneinander abgetrennten Medien können separat voneinander über eine erste Medienabführöffnung und über eine zweite Medienabführöffnung aus dem Trennapparat abgeführt und insbesondere mittels daran angeschlossener Leitungen einer weiteren Nutzung zugeführt werden.

Es wurde gefunden, dass durch die Kombination von Trennung des Mediengemischs und Wärmeübertragung von dem Mediengemisch auf das Wärmetauschermedium eine verbesserte, insbesondere effizientere Trennung des Mediengemischs möglich ist. Die erforderliche Verfahrenstechnik, insbesondere die erforderliche Infrastruktur für die Ausführung des Trennapparats, ist vereinfacht, also reduziert. Die Anzahl von Behältern und Peripheriekomponenten und insbesondere Rohrleitungen ist reduziert. Der Energieaufwand für die Durchführung des Verfahrens ist reduziert. Dadurch ergibt sich eine Kosteneinsparung bei der Durchführung des Verfahrens. Der erforderliche Bauraum für den Trennapparat ist reduziert. Das Verfahren weist eine verringerte Ausfallrate auf. Das Verfahren ist fehlerunanfällig und robust durchführbar.

Ein Verfahren zum Bereitstellen von Wasserstoff, das ein Dehydrieren eines zumindest teilweise beladenen Wasserstoffträgermediums in einem Dehydrierreaktor, ein Abführen eines Mediengemisch mit einem Wasserstoffgas als erstes Medium und mit zumindest teilweise entladenem Wasserstoffträgermedium als zweites Medium aus dem Dehydrierreaktor sowie ein Trennen des Mediengemischs umfasst, ermöglicht die unmittelbare Kombination des Trennverfahrens mit dem Dehydrieren eines zumindest teilweise beladenen Wasserstoffträgermediums, wobei ein Mediengemisch aus Wasserstoffgas und zumindest teilweise entladenem Wasserstoffträgermedium in dem Trennapparat getrennt wird.

Ein Verfahren, bei dem das vorgewärmte Wärmetauschermedium aus dem Trennapparat als beladenes Wasserstoffträgermedium zum Dehydrieren dem Dehydrierreaktor zugeführt wird, ist besonders wirtschaftlich. Das in dem Trennapparat vorgewärmte Wärmetauschermedium kann zum Dehydrieren unmittelbar dem Dehydrierreaktor zugeführt werden. Das, insbesondere zweifach, vorgewärmte Wärmetauschermedium kann entweder aus dem ersten Wärmetauscherabschnitt oder aus dem zweiten Wärmetauscherabschnitt in den Dehydrierreaktor geleitet werden. Der Gesamtenergieeinsatz für ein derartiges Verfahren ist reduziert.

Ein Verfahren, bei dem in einem zweiten Wärmetauscherabschnitt Wärme von dem zweiten Medium auf das Wärmetauschermedium übertragen wird und dadurch ein zusätzliches Erwärmen des Wärmetauschermediums und ein Abkühlen des zweiten Mediums erfolgt, ermöglicht eine zweistufige Erwärmung des Wärmetauschermediums. Die Durchführung des Verfahrens ist besonders effizient. In dem zweiten Wärmetauscherabschnitt ist das zweite Medium, insbesondere zum Großteil und insbesondere vollständig, im flüssigen Zustand.

Ein Verfahren, bei dem das in dem ersten Wärmetauscherabschnitt erwärmte Wärmetauschermedium einem zweiten Wärmetauscherabschnitt oder das in einem zweiten Wärmetauscherabschnitt erwärmte Wärmetauschermedium dem ersten Wärmetauscherabschnitt zugeführt wird, ermöglicht eine kompakte Durchführung des Verfahrens und Ausgestaltung des Trennapparats. Insbesondere kann das Wärmetauschermedium zunächst in einem Wärmetauscherabschnitt erwärmt und dann in einen anderen Wärmetauscherabschnitt überführt werden.

Ein Verfahren gemäß Anspruch 2 ermöglicht die unmittelbare Nutzung des im ersten Wärmetauscherabschnitt kondensierten zweiten Mediums zur Wärmeübertragung in einem zweiten Wärmetauscherabschnitt. Das kondensierte zweite Medium kann vereinfacht von dem ersten Medium abgetrennt und dem zweiten Wärmetauscherabschnitts des Trennapparates zugeführt werden.

Ein Verfahren, bei dem das zweite Medium ein Trägermedium, insbesondere ein Wasserstoffträgermedium, insbesondere ein zumindest teilweise entladenes Wasserstoffträgermedium, ist, ermöglicht die Anbindung des Trennverfahrens eines Mediengemischs aus einem Dehydrierreaktor.

Ein Verfahren gemäß Anspruch 3 ermöglicht die Nutzung eines Mediengemischs aus einem Dehydrierreaktor zur Trennung in dem Trennapparat. Insbesondere beträgt eine Gemisch-Zuführtemperatur mehr als 260 °C, insbesondere mehr als 270 °C, insbesondere mehr als 280 °C und insbesondere mehr als 300 °C. Zusätzlich oder alternativ ermöglicht das Verfahren eine hohe Wärmeaufnahmekapazität für das Wärmetauschermedium.

Ein Verfahren nach Anspruch 4 ermöglicht eine vorteilhafte, insbesondere unmittelbare, Nutzung des aus dem Trennapparat abgeführten ersten Mediums. Das Verfahren ermöglicht zusätzlich oder alternativ eine unmittelbare, insbesondere prozesssichere Verwendung des zweiten Mediums. Insbesondere kann das zweite Medium aus dem Trennapparat unmittelbar einem Speichertank zugeführt und dort zwischengespeichert werden. Die zweite Medium-Abführtemperatur ist insbesondere derart gering, dass das zweite Medium, insbesondere ohne weitere aktive Kühlung, in den Produkttank unmittelbar überführt und dort gespeichert werden kann.

Eine Anordnung zum Bereitstellen von Wasserstoff, die einen Dehydrierreaktor zum Dehydrieren eines zumindest teilweise beladenen Wasserstoffträgermediums und einen Trennapparat aufweist, der mit mindestens einer Medienzuführleitung zum Zuführen des zweiten Mediums aus dem Dehydrierreaktor in den Trennapparat und mit einer Wärmetauschermediumrückführleitung zum Zuführen des Wärmetauschermediums aus dem Trennapparat in den Dehydrierreaktor verbunden ist, ermöglicht eine vorteilhafte Verbindung eines Dehydrierreaktors mit dem Trennapparat. Insbesondere können mehrere Medienzuführleitungen vorgesehen sein, um zumindest teilweise entladenes Wasserstoffträgermedium aus dem Dehydrierreaktor in den Trennapparat zuzuführen. Insbesondere sind eine erste Medienzuführleitung, die den Dehydrierreaktor mit dem ersten Wärmetauscherabschnitt zur Übertragung des Mediengemischs verbindet, und eine zweite Medienzuführleitung, die den Dehydrierreaktor mit dem zweiten Wärmetauscherabschnitt zur Zuführung von flüssigem entladenem Wasserstoffträgermedium als zweites Medium verbindet, vorgesehen.

Der Trennapparat dient zum Trennen des Mediengemischs und weist einen ersten Wärmetauscherabschnitt auf mit einem ersten Wärmetauscherabschnitt-Gehäuse, mit einer Mediengemischzuführöffnung im ersten Wärmetauscherabschnitt-Gehäuse zum Zuführen des Mediengemischs, mit einem an die Mediengemischzuführöffnung angeschlossenen Mediengemischströmungskanal, mit einer ersten Wärmetauschermediumzuführöffnung im ersten Wärmetauscherabschnitt-Gehäuse zum Zuführen eines Wärmetauschermediums in Form eines Wasserstoffträgermediums, mit einem an die erste Wärmetauschermediumzuführöffung angeschlossenen ersten Wärmetauschermediumströmungskanal und mit einer ersten Mediumabführöffnung im ersten Wärmetauscherabschnitt-Gehäuse zum Abführen des ersten abgetrennten Mediums. Der Trennapparat weist im Wesentlichen die Vorteile des Trennverfahrens auf, worauf hiermit verwiesen wird. In dem ersten Wärmetauscherabschnitt des Trennapparats ist ein Wärmetauschermediumströmungskanal vorgesehen, durch den das Wärmetauschermedium strömt. Insbesondere weist der Wärmetauschermediumströmungskanal mindestens ein Rohr auf, durch das das Wärmetauschermedium strömt. Insbesondere weist der Wärmetauschermediumströmungskanal ein Rohrbündel mit mehreren, insbesondere rasterförmig angeordneten, Einzelrohren auf, durch die das Wärmetauschermedium strömt.

Der Trennapparat weist eine erste Mediumabführöffnung auf. Die erste Mediumabführöffnung ist insbesondere an einer Oberseite des ersten Wärmetauscherabschnitt-Gehäuses angeordnet. Das abgetrennte Wasserstoffgas kann selbsttätig, insbesondere entgegen der Schwerkraft, über die erste Mediumabführöffnung aus dem Trennapparat abgeführt werden. Durch die erste Mediumabführöffnung kann das erste abgetrennte Medium, insbesondere abgetrennte Wasserstoffgas, aus dem Trennapparat abgeführt werden.

Insbesondere weist der Trennapparat eine zweite Medienabführöffnung auf, die insbesondere in dem ersten Wärmetauscherabschnitt-Gehäuse angeordnet ist. Die zweite Medienabführöffnung ist insbesondere an einer Unterseite des Trennapparats angeordnet. Durch die zweite Medienabführöffnung kann das kondensierte zweite Medium und/oder flüssiges zweites Medium, das dem Trennapparat bereits flüssig zugeführt worden ist, aus dem Trennapparat abgeführt werden. Das zweite Medium kann insbesondere als Flüssigkeit in dem zweiten Wärmetauscherabschnitt zum zusätzlichen Erwärmen des Wärmeträgermediums dienen. Dazu kann das zweite Medium unmittelbar aus einem Dehydrierreaktor über eine zweite Medienzuführleitung und die zweite Medienzuführöffnung dem zweiten Wärmetauscherabschnitt zugeführt werden. Das zweite Medium kann als Flüssigkeit insbesondere schwerkraftbedingt durch die zweite Medienabführöffnung aus dem Trennapparat abgeführt werden.

Bei einem Trennapparat, der einen zweiten Wärmetauscherabschnitt aufweist, der mit dem ersten Wärmetauscherabschnitt zum Zuführen des in dem ersten Wärmetauscherabschnitt kondensierten zweiten Mediums verbunden ist, kann das im ersten Wärmetauscherabschnitt kondensierte zweite Medium direkt, unkompliziert und unmittelbar von dem ersten Wärmetauscherabschnitt in den zweiten Wärmetauscherabschnitt überführt werden. Wesentlich ist, dass der erste Wärmetauscherabschnitt mit dem zweiten Wärmetauscherabschnitt verbunden ist. Insbesondere ist der erste Wärmetauscherabschnitt mit dem zweiten Wärmetauscherabschnitt hydrostatisch verbunden. Das bedeutet, dass zwischen dem ersten Wärmetauscherabschnitt und dem zweiten Wärmetauscherabschnitt im Wesentlichen kein Druckunterschied anliegt. Ein maximaler Druckunterschied Δp beträgt weniger als 0,1 bar, insbesondere weniger als 0,05 bar und insbesondere weniger als 0,01 bar.

Der Mediengemischströmungskanal ist insbesondere der erste Zwischenraum zwischen dem Wärmetauschermediumströmungskanal und dem ersten Wärmetauscherabschnitt-Gehäuse. Das erste Wärmetauscherabschnitt-Gehäuse ist insbesondere zylinderförmig ausgeführt, mit dem als Rohrbündel ausgeführten Wärmetauschermediumströmungskanal.

Ein Trennapparat, bei dem in dem ersten Wärmetauscherabschnitt, insbesondere in dem Mediengemischströmungskanal, mindestens ein erstes Strömungsumlenkelement angeordnet ist, das insbesondere eine im wesentlichen schlangenlinienförmige Strömung des Mediengemisches im Medienströmungskanal festlegt, ermöglicht eine höhere Verweildauer des Mediengemischs im ersten Wärmetauscherabschnitt. Die Freisetzungsrate, insbesondere die Abtrennungsrate des ersten Mediums aus dem Mediengemisch, ist dadurch erhöht.

Insbesondere ist das mindestens eine erste Strömungsumlenkelement in dem Mediengemischströmungskanal entlang einer Mediengemischströmungsrichtung zwischen der Mediengemischzuführöffnung und der ersten Mediumabführöffnung angeordnet. Das erste Strömungsumlenkelement erzwingt eine Strömungsumlenkung der Mediengemischströmung in dem Mediengemischströmungskanal. Das erste Strömungsumlenkelement ist insbesondere als Strömungsleitblech ausgeführt. Insbesondere sind mehrere erste Strömungsumlenkelemente vorgesehen. Die Mediengemischströmungsrichtung ist durch die Mediengemischzuströmöffnung und die erste Mediumabführöffnung festgelegt. Insbesondere ist die Mediengemischströmungsrichtung im Wesentlichen parallel und insbesondere parallel, zur Gehäuselängsachse des Trennapparats orientiert.

Das mindestens eine Strömungsumlenkelement ermöglicht eine besonders effektive Strömungsumlenkung, insbesondere in Form einer schlangenlinienförmigen Strömung des Mediengemischs. Insbesondere sind mehrere Strömungsumlenkelemente vorgesehen. Die Strömungsumlenkelemente sind insbesondere jeweils identisch ausgeführt und weisen einen Durchströmungsbereich auf, der höchstens 30 % der Strömungsquerschnittsfläche des Mediengemischströmungskanals aufweist, insbesondere höchstens 25 %, insbesondere höchstens 20 % und insbesondere höchstens 15 %. Vorteilhaft ist es, wenn der freibleibende Bereich in einem Randbereich des Mediengemischdurchströmkanals angeordnet ist, also in einem Bereich benachbart zu der Innenwand des ersten Wärmetauscherabschnitt-Gehäuses. Der freibleibende Bereich kann auch innenliegend und insbesondere zentral im Mediengemischströmungskanal angeordnet sein. Vorteilhaft ist es, wenn freibleibende Bereiche entlang der Längsachse des ersten Wärmetauscherabschnitt-Gehäuses, die die Strömungsrichtung des Mediengemischs in dem Mediengemischströmungskanal vorgibt, versetzt zueinander angeordnet sind. Das Mediengemisch, das entlang des Mediengemischströmungskanals strömt, wird zu einer Strömungsumlenkung, insbesondere zu einer, insbesondere horizontal orientierten, zick-zack-förmigen oder schlangenlinienförmigen Strömung, gezwungen.

Ein Trennapparat, bei dem in einem zweiten Mediumströmungskanal des zweiten Wärmetauscherabschnitts mindestens ein zweites Strömungsumlenkelement angeordnet ist, das insbesondere eine im wesentlichen schlangenlinienförmige Strömung des zweiten Mediums im zweiten Mediumströmungskanal festlegt, ermöglicht eine effiziente Strömungsumlenkung im zweiten Wärmetauscherabschnitt. Insbesondere wird das zweite Medium, das flüssig ist, effizient durch das mindestens eine zweite Strömungsumlenkelement für eine verbesserte Wärmeübertragung geführt. Insbesondere sind mehrere zweite Strömungsumlenkelemente vorgesehen, die eine zusätzlich verbesserte, insbesondere schlangenlinienförmige, Strömungsumlenkung für eine verbesserte Wärmeübertragung ermöglichen.

Ein Trennapparat, bei dem der zweite Wärmetauscherabschnitt in dem ersten Wärmetauscherabschnitt-Gehäuse integriert ist, oder in einem zweiten Wärmetauscherabschnitt-Gehäuse integriert ist, das mit dem ersten Wärmetauscherabschnitt-Gehäuse mittels mindestens einer zweiten Medium-Verbindungsleitung verbunden ist, ermöglicht eine vorteilhafte konstruktive Umsetzung.

Eine Anordnung, die einen ersten Wärmetauschermediumspeicherbehälter aufweist, der über eine erste Wärmetauschermediumzufuhrleitung mit dem Trennapparat verbunden ist, ermöglicht eine zuverlässige Versorgung des Trennapparats mit Wärmetauschermedium.

Gemäß einer ersten Alternative, bei der der zweite Wärmetauscherabschnitt in dem ersten Wärmetauscherabschnitt-Gehäuse integriert ist, ist der Trennapparat besonders kompakt ausgeführt.

Gemäß einer zweiten Alternative, bei der der zweite Wärmetauscherabschnitt in einem zweiten Wärmetauscherabschnitt-Gehäuse integriert ist, das mit dem ersten Wärmetauscherabschnitt-Gehäuse verbunden ist, ist eine getrennte Ausführung der Trennungsschritte und Wärmeübertragungsprozesse möglich. Die Verfahrensführung der einzelnen Schritte ist dadurch vereinfacht. Die Wärmetauscherabschnitt-Gehäuse sind mit mindestens einer zweiten Medium-Verbindungsleitung miteinander verbunden. Die zweite Medium-Verbindungsleitung ermöglicht ein Zuführen des im ersten Wärmetauscherabschnitt kondensierten zweiten Mediums unmittelbar in den zweiten Wärmetauscherabschnitt. Die zweite Medium-Verbindungsleitung ist insbesondere als Abtropfkanal ausgeführt. Insbesondere ist es denkbar, mehrere Abtropfkanäle vorzusehen.

Vorteilhafte Ausgestaltungen, zusätzliche Merkmale und Einzelheiten der Erfindung ergeben sich aus der nachfolgenden Beschreibung von zwei Ausführungsbeispielen anhand der Zeichnung. Es zeigen:
- Fig. 1: eine schematische Darstellung einer Anlage zur Dehydrierung eines zumindest teilweise beladenen Wasserstoffträgermediums mit einem Trennapparat,
- Fig. 2: einen Längsschnitt durch den Trennapparat gemäß Fig. 1,
- Fig. 3: eine Schnittansicht gemäß Schnittlinie III-III in Fig. 2
- Fig. 4: eine Darstellung eines kombinierten Strömungsumlenkelements,
- Fig. 5: eine schematische Darstellung der Anlage gemäß Fig. 1 zur Erläuterung der Wärmetauscherabschnitte,
- Fig. 6: eine Fig. 5 entsprechende Darstellung eines Trennapparats gemäß einem zweiten Ausführungsbeispiel mit geänderter Verschaltung der Wärmetauscherabschnitte,
- Fig. 7: eine Fig. 5 entsprechende Darstellung eines Trennapparats gemäß einem dritten Ausführungsbeispiel mit einem zusätzlichen Wärmetauscherabschnitt,
- Fig. 8: eine schematische Detaildarstellung des Trennapparats gemäß Fig. 7,
- Fig. 9: eine Fig. 1 entsprechende Darstellung eines Trennapparats gemäß einem vierten Ausführungsbeispiel.

Einzelheiten der im Folgenden näher erläuterten Ausführungsbeispiele können für sich genommen eine Erfindung darstellen oder Teil eines Erfindungsgegenstands sein.

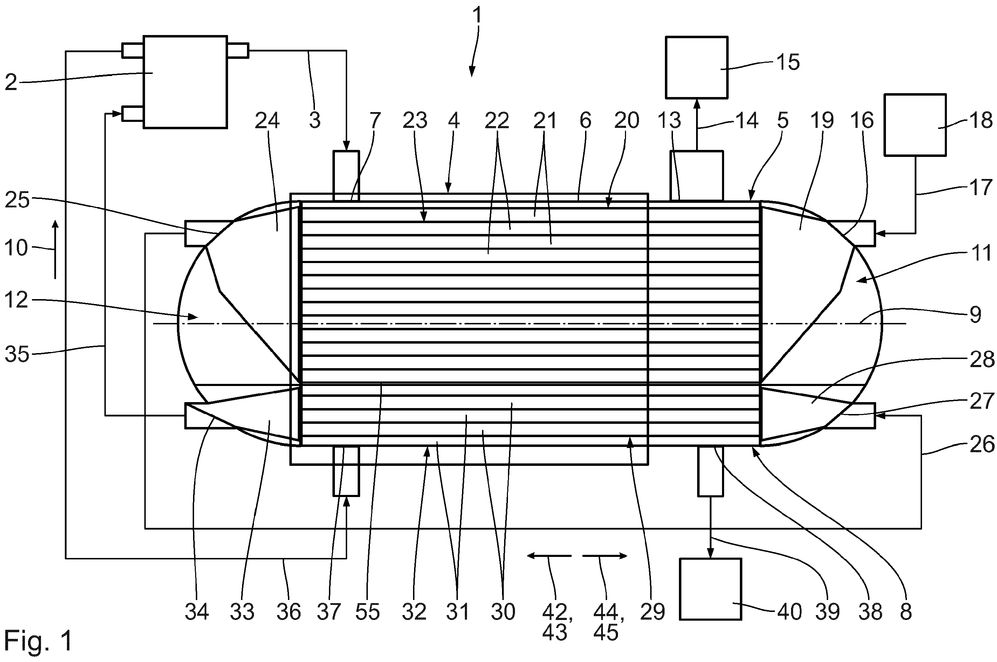

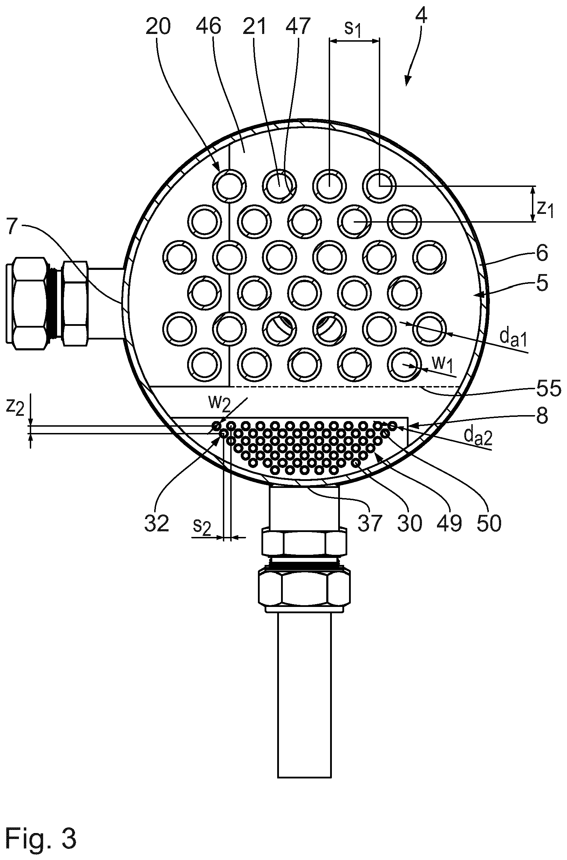

Eine in Fig. 1 bis 5 dargestellte, als Ganzes mit 1 bezeichnete Anlage dient zum Bereitstellen von Wasserstoff, insbesondere von Wasserstoffgas. Die Anlage 1 umfasst einen Dehydrierreaktor 2, der über eine Mediengemisch-Leitung 3 mit einem Trennapparat 4 verbunden ist.

Der Trennapparat 4 weist einen ersten Wärmetauscherabschnitt 5 mit einem ersten Wärmetauscherabschnitt-Gehäuse 6 auf. An dem ersten Wärmetauscherabschnitt-Gehäuse 6 ist eine Mediengemischzuführöffnung 7 angeordnet, an die die Mediengemischleitung 3 angeschlossen ist. Die Mediengemischleitung 3 ist eine Medienzuführleitung.

Der Trennapparat 4 weist ferner einen zweiten Wärmetauscherabschnitt 8 auf, der gemäß dem gezeigten Ausführungsbeispiel in dem ersten Wärmetauscherabschnitt-Gehäuse 6 integriert ist. Der erste Wärmetauscherabschnitt 5 und der zweite Wärmetauscherabschnitt 8 sind unmittelbar miteinander verbunden. Eine räumliche Trennung zwischen den beiden Wärmetauscherabschnitten 5, 8 ist nicht vorgesehen. Die beiden Wärmetauscherabschnitte 5, 8 sind hydrostatisch miteinander verbunden.

Der Trennapparat 4 ist derart angeordnet, dass eine Gehäuselängsachse 9 des ersten Wärmetauscherabschnitt-Gehäuses 6 im Wesentlichen horizontal orientiert ist. Eine Anordnung des ersten Wärmetauscherabschnitt-Gehäuses 6 mit einem Neigungswinkel gegenüber der Horizontalen ist grundsätzlich möglich, wobei der Neigungswinkel gegenüber der Horizontalen kleiner ist als 10°, insbesondere kleiner ist als 5° und insbesondere kleiner ist als 1°. Insbesondere ist die Gehäuselängsachse 9 horizontal orientiert.

Der zweite Wärmetauscherabschnitt 8 ist bezogen auf die Vertikalrichtung 10 unterhalb des ersten Wärmetauscherabschnitts 5 angeordnet. Der erste Wärmetauscherabschnitt 5 ist entlang der Vertikalrichtung 10 mit dem zweiten Wärmetauscherabschnitt 8 über eine Durchgangsöffnung 55 verbunden. Die Durchgangsöffnung 55 ist insbesondere parallel zur Gehäuselängsachse 9 orientiert. Die Durchgangsöffnung 55 entspricht einer virtuellen Trennebene zwischen dem ersten Wärmetauscherabschnitt 5 und dem zweiten Wärmetauscherabschnitt 8. Die Durchgangsöffnung 55 entspricht der Querschnittsfläche des ersten Wärmetauscherabschnitts-Gehäuses 6 im Bereich der Trennebene. Die Durchgangsöffnung 55 erstreckt sich insbesondere über die gesamte Querschnittsfläche des ersten Wärmetauscherabschnitts-Gehäuses 6 in der Trennebene.

Im Bereich der Wärmetauscherabschnitte 5, 8 weist das erste Wärmetauscherabschnitt-Gehäuse 6 eine in einer Ebene senkrecht zur Gehäuselängsachse 9 kreisförmige Querschnittsfläche auf. Die Querschnittsfläche kann auch eine andere Querschnittsform aufweisen. In einer Richtung parallel zur Gehäuselängsachse 9 ist die Querschnittsfläche in dem ersten Wärmetauscherabschnitt 5 und in dem zweiten Wärmetauscherabschnitt 8 konstant.

Stirnseitig an den Wärmetauscherabschnitten 5, 8 sind ein Verteilabschnitt 11, der in Fig. 1 rechts dargestellt ist, und gegenüberliegend ein Sammelabschnitt 12 angeordnet, der in Fig. 1 links dargestellt ist. Der Verteilerabschnitt 11 und der Sammelabschnitt 12 sind jeweils stirnseitig gegenüberliegend an den Wärmetauscherabschnitten 5, 8 angeordnet.

Am ersten Wärmetauscherabschnitt 5 ist eine erste Mediumabführöffnung 13 in dem ersten Wärmetauscherabschnitt-Gehäuse 6 vorgesehen. An die erste Mediumabführöffnung 13 ist über eine erste Medienabführleitung 14 eine erste Medienverwertungseinheit 15 angeschlossen. Gemäß dem gezeigten Ausführungsbeispiel ist die erste Medienverwertungseinheit 15 als Brennstoffzelle ausgeführt und dient insbesondere zum Verstromen von Wasserstoffgas. Die erste Medienverwertungseinheit 15 kann eine nicht dargestellte Luftzuführleitung aufweisen, um die für die Oxidation in der Brennstoffzelle 15 erforderliche Luft zuführen zu können. Zusätzlich oder alternativ kann eine separate Sauerstoffzuführung vorgesehen sein. Die Brennstoffzelle 15 ist insbesondere mit einem elektrischen Verbraucher, insbesondere in Form eines elektrischen Stromnetzes, insbesondere einer Messleitung, elektrisch verbunden. Die Brennstoffzelle 15 kann zur Abführung der in der Brennstoffzelle 15 erzeugten Wärme mit einem nicht dargestellten Wärmetauscher verbunden sein.

Die erste Medienverwertungseinheit 15 kann beispielsweise auch als Wasserstoffgasbrenner oder als Wasserstoffgasverbrennungsmotor ausgeführt sein.

Im Verteilabschnitt 11 ist in dem ersten Wärmetauscherabschnitt-Gehäuse 6 eine erste Wärmetauschermediumzuführöffnung 16 angeordnet, die über eine erste Wärmetauschermediumzuführleitung 17 mit einem ersten Wärmetauschermediumspeicherbehälter 18 verbunden ist.

In dem Verteilerabschnitt 11 ist eine erste Verteilereinheit 19 angeordnet und an die erste Wärmetauschermediumzuführöffnung 16 angeschlossen. Die erste Verteilereinheit 19 ist mit einem ersten Wärmetauschermediumströmungskanal 20 verbunden, der in dem ersten Wärmetauscherabschnitt 5 angeordnet ist. Der erste Wärmetauschermediumströmungskanal 20 umfasst mehrere erste Wärmetauscherrohre 21, durch die ein Wärmetauschermedium strömen kann. Der erste Wärmetauschermediumströmungskanal 20 ist als Rohrbündel ausgeführt. Die ersten Wärmetauscherrohre 21 sind beabstandet zueinander angeordnet. Die ersten Wärmetauscherrohre 21 sind jeweils parallel zur Gehäuselängsachse 9 orientiert. Zwischen den ersten Wärmetauscherrohren 21 sind erste Zwischenräume 22 gebildet. Die ersten Zwischenräume 22 bilden einen Mediengemischströmungskanal 23, der mit der Mediengemischzuführöffnung 7 verbunden ist. Der erste Wärmetauschermedienströmungskanal 20 ist von dem Mediengemischströmungskanal 23 räumlich getrennt. Ein Vermischen des Wärmetauschermediums mit dem Mediengemisch ist ausgeschlossen.

In dem Sammelabschnitt 12 ist eine erste Sammeleinheit 24 angeordnet, die mit dem ersten Wärmetauschermediumströmungskanal 20, also mit den ersten Wärmetauscherrohren 21, verbunden ist. Die erste Sammeleinheit 24 ist an eine erste Wärmetauschermediumabführöffnung 25 an dem Sammelabschnitt 12 in dem ersten Wärmetauscherabschnitt-Gehäuse 6 angeschlossen. Die erste Wärmetauschermediumabführöffnung 25 ist über eine Wärmetauschermediumzwischenleitung 26 mit einer zweiten Wärmetauschermediumzuführöffnung 27 verbunden.

Die zweite Wärmetauschermediumzuführöffnung 27 ist in dem Verteilerabschnitt 11 unterhalb der ersten Wärmetauschermediumzuführöffnung 26 angeordnet. An die zweite Wärmetauschermediumzuführöffnung 27 ist eine zweite Verteilereinheit 28 angeschlossen, die die zweite Wärmetauschermediumzuführöffnung 27 mit einem zweiten Wärmetauschermediumströmungskanal 29 verbindet. Der zweite Wärmetauschermediumströmungskanal 29 ist als Rohrbündel ausgeführt mit mehreren zweiten Wärmetauscherrohren 30. Die zweiten Wärmetauscherrohre 30 sind identisch ausgeführt, beabstandet zueinander in dem zweiten Wärmetauscherabschnitt 8 angeordnet und parallel zur Gehäuselängsachse 9 orientiert.

Zwischen den zweiten Wärmetauscherrohren 30 werden zweite Zwischenräume 31 gebildet, die einen zweiten Medienströmungskanal 32 bilden.

In dem Sammelabschnitt 12 ist unterhalb der ersten Sammeleinheit 24 eine zweite Sammeleinheit 33 angeordnet, die den zweiten Medienströmungskanal 32 mit einer zweiten Wärmetauschermediumabführöffnung 34 verbindet. Die zweite Wärmetauschermediumabführöffnung 34 ist über eine zweite Wärmetauschermediumrückführleitung 35 mit dem Dehydrierreaktor 2 verbunden. Entlang der zweiten Wärmetauschermediumrückführleitung 35 kann ein nicht dargestellter Speicherbehälter angeordnet sein, in dem das Wärmetauschermedium aus dem Trennapparat 4 zwischengespeichert wird. Entsprechend kann ein Speicherbehälter entlang der Wärmetauschermediumzwischenleitung 26 angeordnet sein.

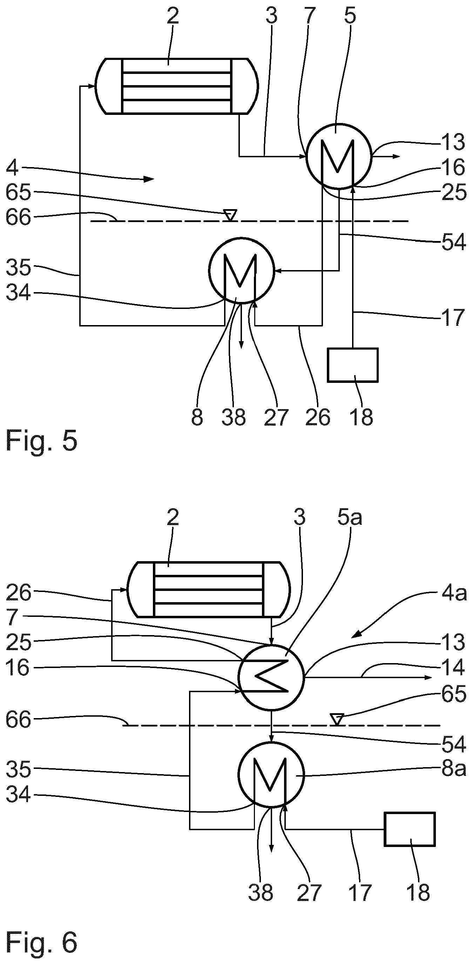

Der Dehydrierreaktor 2 ist über eine zweite Medienzuführleitung 36 an eine zweite Medienzuführöffnung 37 angeschlossen. Die zweite Medienzuführöffnung 37 ist an dem zweiten Wärmetauscherabschnitt 8 in dem ersten Wärmetauscherabschnitt-Gehäuse 6 angeordnet. Die zweite Medienzuführöffnung 37 ist mit dem zweiten Medienströmungskanal 32 verbunden. Die zweite Medienzuführleitung 36 ist aus Darstellungsgründen in Fig. 5 nicht dargestellt.

An dem zweiten Wärmetauscherabschnitt 8 ist in dem ersten Wärmetauscherabschnitt-Gehäuse 6 entlang der Gehäuselängsachse 9 beabstandet zu der zweiten Medienzuführöffnung 37 eine zweite Medienabführöffnung 38 angeordnet. Die zweite Medienabführöffnung 38 ist mit dem zweiten Medienströmungskanal 32 verbunden. An die zweite Medienabführöffnung 38 ist eine zweite Medienabführleitung 39 angeschlossen, die mit einem zweiten Medienspeicherbehälter 40 verbunden ist.

Die erste Wärmetauschermediumzuführöffnung 16 und die erste Wärmetauschermediumabführöffnung 25, die jeweils stirnseitig und gegenüberliegend an dem ersten Wärmetauscherabschnitt-Gehäuse 6 angeordnet sind, legen eine erste Wärmetauschermediumströmungsrichtung 42 fest, die gemäß Fig. 1 von rechts nach links orientiert ist und parallel zur Gehäuselängsachse 9 verläuft.

Entsprechend ist die zweite Wärmetauschermediumströmungsrichtung 43 gemäß Fig. 1 von rechts nach links gerichtet und durch die zweite Wärmetauschermediumzuführöffnung 27 und die zweite Wärmetauschermediumabführöffnung 34 festgelegt, die stirnseitig gegenüberliegend an dem ersten Wärmetauscherabschnitt-Gehäuse 6 angeordnet sind. Die erste Wärmetauschermediumströmungsrichtung 32 und die zweite Wärmetauschermediumströmungsrichtung 43 sind parallel zueinander orientiert.

Durch die Mediengemischzuführöffnung 7 und die erste Mediumabführöffnung 13 wird eine Mediengemischströmungsrichtung 44 festgelegt, die gemäß Fig. 1 im Wesentlichen von links nach rechts orientiert ist und insbesondere parallel zur Gehäuselängsachse 9 orientiert ist. Die Mediengemischströmungsrichtung 44 ist der ersten Wärmetauschermedienströmungsrichtung 42 entgegengesetzt orientiert. Der erste Wärmetauscherabschnitt 5 wird im Gegenstromverfahren betrieben.

Eine zweite Medienströmungsrichtung 45 ist durch die zweite Medienzuführöffnung 37 und die zweite Medienabführöffnung 38 festgelegt. Die zweite Medienströmungsrichtung 45 ist im Wesentlichen parallel zur Gehäuselängsachse 9 orientiert und gemäß Fig. 1 von links nach rechts gerichtet. Die zweite Medienströmungsrichtung 45 ist der zweiten Wärmetauschermediumströmungsrichtung 43 entgegengesetzt gerichtet. Der zweite Wärmetauscherabschnitt 8 wird im Gegenstromverfahren betrieben.

Der erste Wärmetauscherabschnitt 5 ist als Gaskühler und/oder Kondensator ausgeführt.

Der zweite Wärmetauscherabschnitt 8 ist als Flüssig-Flüssig-Rekuperator ausgeführt.

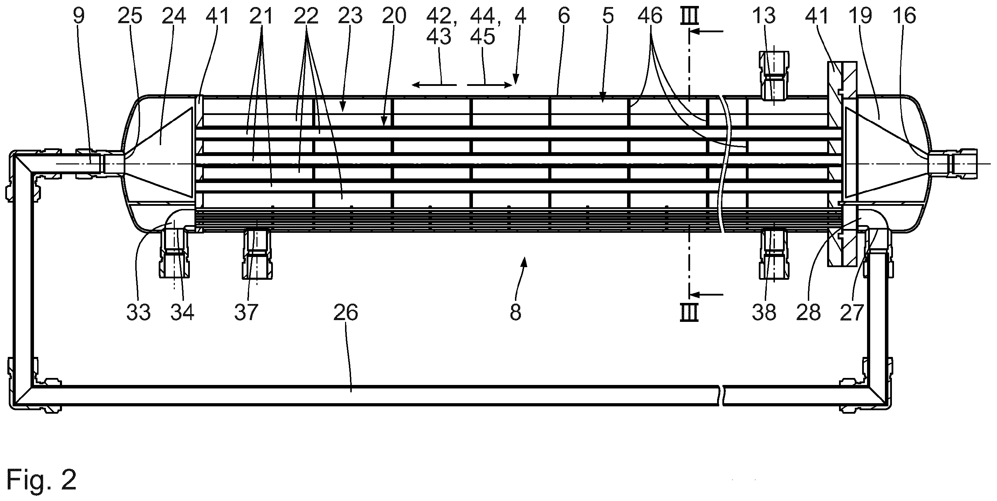

Nachfolgend wird anhand von Fig. 2 bis 4 der Trennapparat 4, insbesondere der erste Wärmetauscherabschnitt 5 und der zweite Wärmetauscherabschnitt 8, näher erläutert.

Jeweils stirnseitig an den Wärmetauscherabschnitten 5, 8 ist eine Abschlussplatte 41 angeordnet. Die Abschlussplatten 41 dienen zum Abschließen des Mediengemischströmungskanals 23 in dem ersten Wärmetauscherabschnitt 5 gegenüber dem Verteilerabschnitt 1 und dem Sammelabschnitt 12. Insbesondere sind der Mediengemischströmungskanal 23 und der zweite Medienströmungskanal 32 durch die Abschlussplatten 41 abgeschlossen.

Die Abschlussplatten 41 weisen jeweils Öffnungen auf, durch die hindurch die ersten Wärmetauscher-Rohre 21 und die zweiten Wärmetauscher-Rohre 30 hindurchgeführt und mit der jeweiligen Verteilereinheit 19, 28 bzw. mit der jeweiligen Sammeleinheit 24, 33 verbunden werden. Die ersten Wärmetauscher-Rohre 21 und die zweiten Wärmetauscher-Rohre 30 sind durch die Öffnungen in den Abschlussplatten 41 jeweils abgedichtet hindurchgeführt.

Die ersten Wärmetauscher-Rohre 21 und die zweiten Wärmetauscher-Rohre 30 sind in den Öffnungen der Abschlussplatten 41 zuverlässig in dem ersten Wärmetauscherabschnitt-Gehäuse 6 angeordnet und gehalten.

Gemäß dem gezeigten Ausführungsbeispiel weist das Rohrbündel des ersten Wärmetauschermediumströmungskanals 20 einunddreißig erste Wärmetauscherrohre 21 auf, die in einem regelmäßigen Raster mit einem ersten Zeilenabstand z₁ und mit einem ersten Spaltenabstand s₁ angeordnet sind. Gemäß dem gezeigten Ausführungsbeispiel gilt: s₁ > z₁, s₁ = 1,2 · z₁. Der erste Spaltenabstand ist horizontal orientziert. Der erste Zeilenabstand z₁ ist vertikal orientiert, also entlang der Vertikalrichtung 10.

Die ersten Wärmetauscherrohre 21 weisen einen Außendurchmesser dₐ₁ und eine Wandstärke w₁ auf. Es gilt: dₐ₁ ≤ z₁. dₐ₁ < s₁, insbesondere dₐ₁ < 0,9 · s₁ und insbesondere dₐ₁ <0,8 · s₁. Gemäß dem gezeigten Ausführungsbeispiel beträgt der erste Außendurchmesser der ersten Wärmetauscherrohre 21 60 mm.

Der zweite Medienströmungskanal 32 weist insgesamt achtundsechzig zweite Wärmetauscherrohre 30 auf, die einen zweiten Außendurchmesser dₐ₂ von 4 mm aufweisen. Die zweite Wandstärke w₂ beträgt für das gezeigte Ausführungsbeispiel 0,5 mm. Der zweite Zeilenabstand z₂ und der zweite Spaltenabstand s₂ sind entsprechend festgelegt. Es gilt: s₂ > z₂, insbesondere s₂ >1,5 · z₂ und insbesondere s₂ >2 · z₂.

Die Anzahl, die Anordnung und/oder die jeweilige Größe der ersten Wärmetauscherrohre 21 bzw. der zweiten Wärmetauscherrohre 30 kann in Abhängigkeit der jeweiligen Strömungsbedingungen und insbesondere zur Beeinflussung der Strömungsverhältnisse in dem Trennapparat 4 veränderlich angepasst werden.

Entlang der Gehäuselängsachse 9 sind in dem ersten Wärmetauscherabschnitt 5 mehrere erste Strömungsumlenkelemente 46 vorgesehen. Gemäß dem gezeigten Ausführungsbeispiel sind dreizehn erste Strömungsumlenkelemente 46 angeordnet. Die ersten Strömungsumlenkelemente 46 dienen zur Strömungsumlenkung des Mediengemischs entlang des Mediengemischströmungskanals 23. Die ersten Strömungsumlenkelemente 46 weisen Durchgangsöffnungen 47 auf, durch die hindurch die ersten Wärmetauscherrohre 21 abgedichtet hindurchgeführt sind. Das Strömungsumlenkelement 46 ist als Strömungsleitblech ausgeführt und weist einen Freigabebereich 48 auf, in dem das Strömungsumlenkelement 46 freigeschnitten ist. Der Freigabebereich 48 definiert einen reduzierten Strömungsquerschnitt für das Mediengemisch entlang des Mediengemischströmungskanals 23.

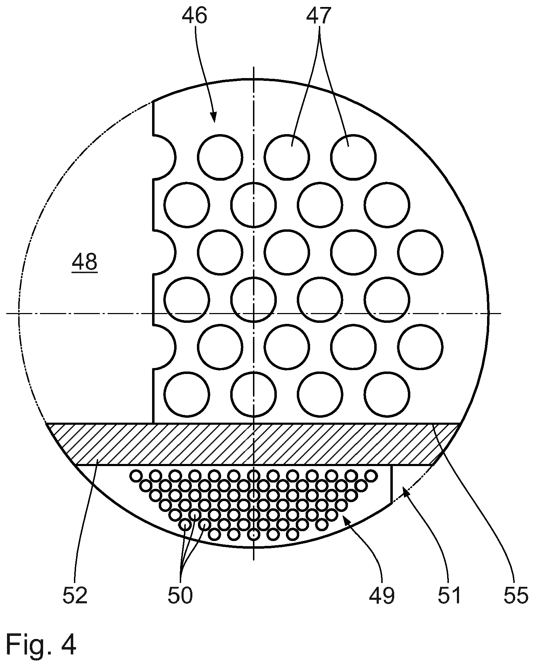

Bezogen auf den Strömungsquerschnitt ist der Freigabebereich 48 gemäß dem in Fig. 4 dargestellten ersten Strömungsumlenkelement 46 seitlich, insbesondere links, angeordnet. Entlang der Mediengemischströmungsrichtung 44 sind die ersten Strömungsumlenkelemente 46 abwechselnd derart angeordnet, dass der jeweilige Freigabebereich 48 der ersten Strömungsumlenkelemente 46 seitlich wechselnd orientiert ist. Dadurch wird das Mediengemisch entlang des Mediengemischströmungskanals 23 zu einer schlangenlinienförmigen Strömung gezwungen. Dadurch ergibt sich eine höhere Verweildauer des Mediengemischs im ersten Wärmetauscherabschnitt 5, wodurch der Wärmeübertrag zusätzlich verbessert ist.

In dem zweiten Wärmetauscherabschnitt 8 sind entlang der zweiten Medienströmungsrichtung 45 mehrere, gemäß dem gezeigten Ausführungsbeispiel dreizehn, zweite Strömungsumlenkelemente 49 angeordnet, die entsprechend zweite Durchgangsöffnungen 50 und einen zweiten Freigabebereich 51 aufweisen.

Gemäß dem gezeigten Ausführungsbeispiel sind das erste Strömungsumlenkelement 46 und das zweite Strömungsumlenkelement 49 einstückig als Strömungsleitblech ausgeführt. Die Ausführung der Strömungsumlenkelemente 46, 49 ist besonders effizient und materialsparend ausgeführt.

Aufgrund der einteiligen Ausführung der Strömungsumlenkelemente 46, 49 als Strömungsleitblech ist die Anzahl der ersten Strömungselemente 46 und der zweiten Strömungselemente 49 identisch. Es ist auch möglich, unterschiedliche Anzahlen erster Strömungsumlenkelemente 46 und zweiter Strömungsumlenkelemente 49 vorzusehen. Insbesondere ist es denkbar, zwischen zwei Strömungsleitblechen ein erstes Strömungsumlenkelement 46 und/oder ein zweites Strömungsumlenkelement 49 separat anzuordnen. Es können auch mehrere Strömungsumlenkelemente 46, 49 zwischen zwei Strömungleitblechen angeordnet sein.

Es ist insbesondere denkbar, dass zwischen zwei benachbarten Strömungsleitblechen jeweils genau ein zweites Strömungsumlenkelement 49 angeordnet ist, sodass in Summe n erste Strömungsumlenkelemente 46 und (2n-1) zweite Strömungsumlenkelemente 49 vorgesehen sind.

Die Strömungsleitbleche sind entlang der Mediengemischströmungsrichtungen 44, 45 jeweils beabstandet, insbesondere gleichmäßig beabstandet, zueinander angeordnet.

Insbesondere sind der erste Freigabereich 48 und der zweite Freigabereich 51 in Vertikalrichtung 10 durch einen Barriereabschnitt 52 voneinander getrennt. Durch den Barriereabschnitt 52 wird verhindert, dass das zweite Medium aus dem zweiten Wärmetauscherabschnitt 8 unbeabsichtigt im Bereich der Strömungsumlenkelemente 46 aus dem zweiten Medienströmungskanal 32 in den Mediengemischströmungskanal 23 gelangt.

Gemäß dem gezeigten Ausführungsbeispiel ist der erste Wärmetauscherabschnitt 5 oberhalb eines Flüssigkeitspegels 66 angeordnet. Der erste Wärmetauscherabschnitt 5 ist gasdurchströmt und kann flüssige Anteile, beispielsweise Dampf und/oder Tröpfchen, aufweisen.

Der zweite Wärmetauscherabschnitt 8 ist unterhalb des Pegels 66 angeordnet. Der zweite Wärmetauscherabschnitt 8 ist flüssigkeitsgefüllt.

Nachfolgend wird ein Verfahren zum Bereitstellen von Wasserstoff näher erläutert.

In dem Dehydrierreaktor 2 findet eine katalytische Dehydrierung eines zumindest teilweise mit Wasserstoff beladenen Wasserstoffträgermediums (LOHC+) statt. Aus dem Dehydrierreaktor 2 wird über die Mediengemischleitung 3 das Mediengemisch dem Trennapparat 4 zugeführt. Das Mediengemisch weist als erstes, gasförmiges Medium Wasserstoffgas (H₂) und als zweites Medium zumindest teilweise entladendes Wasserstoffträgermedium (LOHC-) auf. Der Anteil am zweiten Medium in dem Mediengemisch ist unerwünscht und soll in dem Trennapparat 4 abgetrennt werden. Das zweite Medium liegt zumindest teilweise dampfförmig und/oder in Tröpfchenform in dem Mediengemisch vor.

Das Mediengemisch wird mit einer Gemisch-Zuführtemperatur von mehr als 250 °C dem Trennapparat 4 zugeführt. Das Mediengemisch durchströmt den ersten Wärmetauscherabschnitt 5 entlang der Mediengemischströmungsrichtung 44, insbesondere durch den Mediengemischströmungskanal 23. Die Hauptströmungsrichtung des Mediengemischs erfolgt entlang der Mediengemischströmungsrichtung 44, wobei durch die ersten Strömungsumlenkelemente 46 eine schlangenlinienförmige Strömungsrichtung erzwungen wird. Dadurch ist die Verweildauer des Mediengemischs in dem Mediengemischströmungskanal 23 erhöht.

In der Gegenrichtung, der ersten Wärmetauschermediumströmungsrichtung 42, durchströmt ein Wärmetauschermedium den ersten Wärmetauscherabschnitt 5, insbesondere entlang des ersten Wärmetauschermediumströmungskanals 20, also innerhalb der ersten Wärmetauscherrohre 21. Das Wärmetauschermedium stammt aus dem Wärmetauschermediumspeicherbehälter 18 und wird über die erste Wärmetauschermediumleitung 17 an die erste Verteilereinheit 19 zugeführt. Der erste Wärmetauscherabschnitt wird im Gegenstromverfahren betrieben. Es findet eine Wärmeübertragung von dem heißen Mediengemisch auf das Wärmetauschermedium statt.

Als Wärmetauschermedium dient insbesondere zumindest teilweise beladendes LOHC (LOHC+).

Durch den Wärmeübertrag von dem Mediengemisch auf das Wärmetauschermedium in den ersten Wärmetauscherabschnitt 5 wird das Wärmetauschermedium erwärmt, das erste Medium abgekühlt und das zweite dampfförmige Medium zumindest teilweise kondensiert. Es ist denkbar, dass der Wärmeübertrag auf das zweite Medium bewirkt, dass das bereits gebildete Kondensat des zweiten Mediums zusätzlich abkühlt. Durch die Kondensatbildung des zweiten Mediums kann das kondensierte zweite Medium unmittelbar aus dem Mediengemisch von dem ersten Medium abgetrennt werden. Insbesondere kann das kondensierte zweite Medium nach unten abtropfen und durch die Durchgangsöffnung 55 unmittelbar in den zweiten Wärmetauscherabschnitt 8 gelangen. Dadurch, dass der erste Wärmetauscherabschnitt 5 und der zweite Wärmetauscherabschnitt 8 räumlich unmittelbar miteinander verbunden sind und insbesondere eine räumliche Trennung der beiden Wärmetauscherabschnitte 5, 8 nicht vorgesehen ist, kann das kondensierte zweite Medium unmittelbar und schwerkraftbedingt dem zweiten Wärmetauscherabschnitt 8 des Trennapparats 4 zugeführt werden.

Dadurch, dass das zweite Medium durch den Wärmeübertrag kondensiert und aus dem Mediengemisch abtropft, findet eine zuverlässige und effektive Reinigung des Mediengemischs statt. Das kondensierte zweite Medium kann insbesondere unmittelbar von dem ersten Wärmetauscherabschnitt 5 in den zweiten Wärmetauscherabschnitt 8 in Folge der Schwerkraft abtropfen. Dabei ist vorteilhaft, dass der zweite Wärmetauscherabschnitt 8 unmittelbar unterhalb des ersten Wärmetauscherabschnitts 5 angeordnet ist. Über die erste Mediumabführöffnung 13 kann das gereinigte Wasserstoffgas aus dem Trennapparat 4 abgeführt und einer weiteren Verwertung in der ersten Medienverwertungseinheit 15 zugeführt werden. Das erste Medium wird mit einer ersten Medium-Abführtemperatur aus dem Trennapparat 4 abgeführt, die kleiner ist als 40 °C.

Dadurch, dass das heiße Mediengemisch zunächst den Kondensator und/oder den Gaskühler durchströmt, erfolgt eine besonders effiziente Kühlung des Wasserstoffgases und eine besonders effektive Kondensation des zweiten Mediums, also des LOHC-Dampfes. Insbesondere ist eine zusätzliche Kühlung, beispielsweise mittels eines extern gespeisten Kühlapparats, für das zweite Medium entbehrlich.

Das in ersten Wärmetauscherabschnitt 5 erwärmte Wärmetauschermedium (LOHC+) wird über die Wärmetauschermediumzwischenleitung 26 der zweiten Wärmetauschermediumzuführöffnung 27 des zweiten Wärmetauscherabschnitts 8 zugeführt. In dem zweiten Wärmetauscherabschnitt 8 findet ein Wärmeübertrag von dem heißen, zumindest teilweise dehydrierten Wasserstoffträgermedium (LOHC-) und dem bereits vorgewärmten Wärmeträgermedium (LOHC+) statt. Das zweite Medium (LOHC-), das dem zweiten Wärmetauscherabschnitt 8 aus dem Dehydrierreaktor 2 über die zweite Medienzuführleitung 36 und die zweite Medienzuführöffnung 37 und/oder unmittelbar aus dem ersten Wärmetauscherabschnitt 5 zugeleitet wird, wird in dem zweiten Wärmetauscherabschnitt 8 unmittelbar abgekühlt. Die Wärme wird an das Wärmetauschermedium (LOHC+) abgegeben. Dazu strömt das Wärmetauschermedium (LOHC+) durch die zweiten Wärmetauscherrohre 30 des zweiten Wärmetauschermedienströmungskanals 29. Im Gegenstrom dazu strömt das zweite Medium (LOHC+) durch den zweiten Medienströmungskanal 32. Besonders vorteilhaft ist es, dass als Wärmetauschermedium zumindest teilweise beladenes Wasserstoffträgermedium (LOHC+) genutzt werden kann, das nach der zweistufigen Erwärmung in dem ersten Wärmetauscherabschnitt 5 und in dem zweiten Wärmetauscherabschnitt 8 über die zweite Wärmetauschermediumrückführleitung 35 unmittelbar dem Dehydrierreaktor 2 zur Dehydrierung zur Verfügung gestellt werden kann. Die im Trennapparat 4 abgegebene Wärme dient unmittelbar zum Vorheizen des zumindest teilweise beladenen Wasserstoffträgermediums für den nachfolgenden Dehydrierprozess in dem Dehydrierreaktor 2. Dadurch ist es möglich, eine effektive Wärmenutzung zu integrieren, wodurch der Gesamtenergieaufwand des erfindungsgemäßen Verfahrens zum Bereitstellen von Wasserstoff zusätzlich verringert ist. Das zumindest teilweise entladene LOHC, das als zweites Medium aus dem freigesetzten Wasserstoffgasstrom abgetrennt worden ist, kann in dem zweiten Medienspeicherbehälter 40 gesammelt und einer weiteren Aufbereitung, also einer erneuten Hydrierung in einer Beladeeinheit, zugeführt werden.

Das abgekühlte, zweite Medium wird mit einer zweiten Medium-Abführtemperatur aus dem Trennapparat 4 abgeführt, die kleiner ist als 200 °C.

Das Wärmetauschermedium wird dem Trennapparat 4 mit einer ersten Wärmetauscher-Zuführtemperatur zugeführt, die kleiner ist als 30 °C. Die erste Wärmetauscher-Zuführtemperatur beträgt insbesondere Raumtemperatur. Insbesondere ist ein Vorheizen des Wärmetauschermediums, das später zur Dehydrierung in dem Dehydrierreaktor 2 unmittelbar genutzt werden kann, nicht erforderlich. Der Gesamtenergieaufwand für das Verfahren ist reduziert.

Es ist auch denkbar, dass das in dem Trennapparat 4 gereinigte erste Medium, also Wasserstoffgas, nicht nur gereinigt, sondern insbesondere auch gekühlt wird. Das gereinigte und gekühlte Wasserstoffgas kann beispielsweise einer Kompression in einem nicht dargestellten Kompressor zugeführt werden.

Das Wasserstoffträgermedium (LOHC) kann reversibel in katalytischen Hydrier- und Dehydrierreaktionen be- und entladen werden. Durch das wiederholte Be- und Entladen kann das LOHC Verunreinigungen aufweisen, die die Effizienz, also den Wirkungsgrad, der Hydrier- und Dehydrierreaktionen beeinträchtigen können. Zur Qualitätsbestimmung des LOHC-Materials kann es deshalb vorgesehen sein, das aus dem Trennapparat 4 über die erste Medienabführleitung 14 abgegebene Wasserstoffgas zu analysieren und zu klassifizieren. Dies ist insbesondere dadurch möglich, dass beispielsweise Verunreinigungen in dem Wasserstoffgas gemessen und/oder die Menge des freigesetzten Wasserstoffgases gemessen wird, wodurch Rückschlüsse auf die Qualität des Wasserstoffträgermediums gezogen werden können.

Insbesondere kann einer Charge des Wasserstoffträgermediums eine Alterskennzahl zugeordnet werden, die, insbesondere periodisch und insbesondere nach n Dehydrierzyklen, wobei n = 1, 2, 3, 4, 5, 6, 7, 8, 10, 12, 15, 20 ist, in Abhängigkeit der Messergebnisse angepasst wird. Es ist auch denkbar, die Alterskennzahl des Wasserstoffträgermediums allein in Abhängigkeit der Dehydrierzyklen n und/oder in Abhängigkeit des Alters des Wasserstoffträgermediums und/oder in Abhängigkeit der Einsatzzeit des Wasserstoffträgermediums im Verfahren, anzupassen. Diese Zykluszahl bzw. zeitabhängige Alterungskriterien sind ohne Analyse des Wasserstoffgases möglich und insbesondere unkompliziert und kosteneffizient durchführbar.

Im Folgenden wird unter Bezugnahme auf Fig. 6 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass das kalte Wärmetauschermedium aus dem ersten Wärmetauschermediumspeicherbehälter 18 über die erste Wärmetauschermediumzuführleitung 17 mit dem zweiten Wärmetauscherabschnitt 8a verbunden ist. Der zweite Wärmetauscherabschnitt 8a ist als Flüssig-Flüssig-Rekuperator ausgeführt. Die zweite Wärmetauscher-Mediumabführöffnung 34 ist über die zweite Wärmetauscher-Mediumrückführleitung 35 mit der ersten Wärmetauschermedium-Zuführöffnung 16 des ersten Wärmetauscherabschnitts 5a verbunden.

Der erste Wärmetauscherabschnitt 5a ist als Kondensator und/oder Gaskühler ausgeführt. Die erste Wärmetauscher-Mediumabführöffnung 25 ist über die WärmetauscherMediumzwischenleitung 26 mit dem Dehydrierreaktor 2 verbunden.

Im Vergleich zu dem ersten Ausführungsbeispiel sind der Kondensator und/oder Gaskühler 5a und der Flüssig-Flüssig-Rekuperator 8a bei dem Ausführungsbeispiel gemäß Fig. 5 in umgekehrter Reihenfolge bezüglich der Fluidströmung des Wärmetauschermediums verschaltet.

Bei dem Ausführungsbeispiel gemäß Fig. 6 ist eine höhere Wärmerekuperation möglich, also ein verbesserter Wärmeübertrag von dem kalten, zumindest teilweise beladenen Wasserstoffträgermedium (LOHC+) auf das erwärmte, zumindest teilweise entladene Wasserstoffträgermedium (LOHC-) in flüssiger Form. Die in dem flüssigen LOHC- gespeicherte Wärme kann unmittelbare zum Erwärmen, also zum Vorwärmen, des zumindest teilweise beladenen Wasserstoffträgermediums (LOHC+) genutzt werden. Dadurch ist es möglich, den Flüssig-Flüssig-Rekuperator 8a kleinbauend auszuführen. Der Trennapparat 4a ist insgesamt kleinbauend ausgeführt.

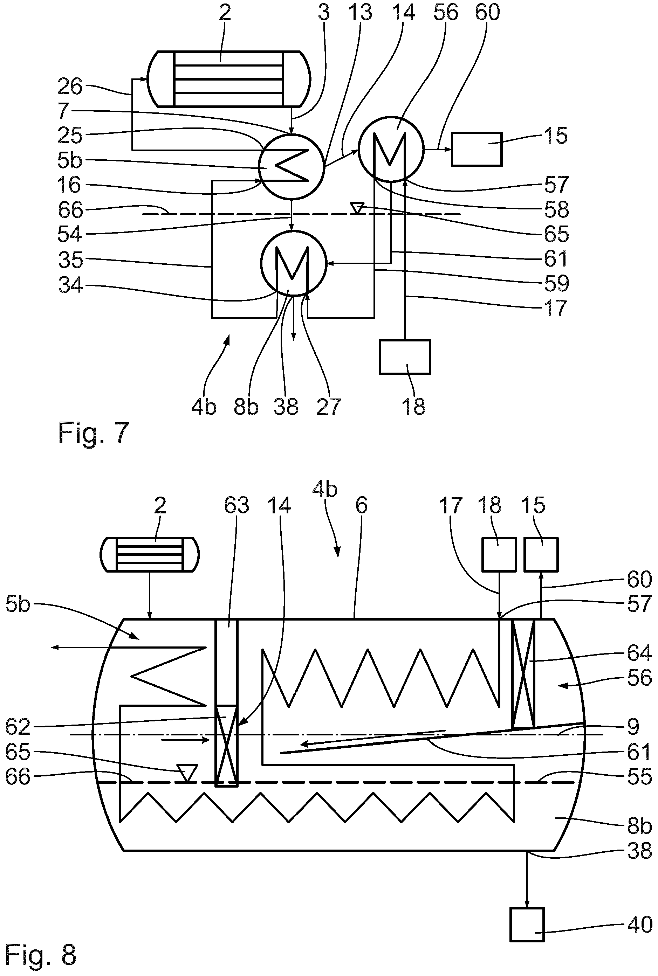

Im Folgenden wird unter Bezugnahme auf Fig. 7 und 8 ein drittes Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsbeispielen besteht darin, dass ein dritter Wärmetauscherabschnitt 56 vorgesehen ist, der über die erste Wärmetauschermediumleitung 17 mit dem ersten Wärmetauschermediumspeicherbehälter 18 verbunden ist. Der dritte Wärmetauscherabschnitt 56 ist als Gaskühler ausgeführt. Der Gaskühler 56 weist eine Zuführöffnung 57 für das kalte, zumindest teilweise beladene Wasserstoffträgermedium (LOHC+) auf. Der dritte Wärmetauscherabschnitt 56 weist ferner eine Abführöffnung 58 zum Abführen des in dem Gaskühler 50 erwärmten LOHC+ auf.

Der dritte Wärmetauscherabschnitt 56 ist oberhalb des Flüssigkeitspegels 66 angeordnet. Der dritte Wärmetauscherabschnitt 56 ist im Wesentlichen baugleich zu dem ersten Wärmetauscherabschnitt 5b ausgeführt.

Das in dem dritten Wärmetauscherabschnitt 56 vorgeheizte LOHC+ wird über eine Verbindungsleitung 59 im zweiten Wärmetauscherabschnitt 8b an der zweiten Wärmetauscher-Zuführöffnung 27 zugeführt. Der zweite Wärmetauscherabschnitt 8b ist als Flüssig-Flüssig-Rekuperator gemäß dem zweiten Ausführungsbeispiel ausgeführt. Der erste Wärmetauscherabschnitt 5b ist mit dem zweiten Wärmetauscherabschnitt 8b über die zweite Wärmetauscher-Mediumrückführleitung 35 verbunden.

Der erste Wärmetauscherabschnitt 5b ist als Vorkondensator ausgeführt und an der ersten Wärmetauscher-Mediumabführöffnung 25 über die WärmetauscherMediumzwischenleitung 26 mit dem Dehydrierreaktor 2 verbunden.

Der erste Wärmetauscherabschnitt 5b ist an der Mediumabführöffnung 13 über die erste Mediumabführleitung 14 mit dem dritten Wärmetauscherabschnitt 56 verbunden.

An dem dritten Wärmetauscherabschnitt 56 ist eine zweite Medienabführleitung 60 angeschlossen, die mit der ersten Medienverwertungseinheit 15 verbunden ist.

Der dritte Wärmetauscherabschnitt 56 ist über eine Kondensatleitung 61 mit dem zweiten Wärmetauscherabschnitt 8b verbunden.

Bei dem Ausführungsbeispiel gemäß Fig. 7 werden die verfahrensbedingten Vorteile der Ausführungsbeispiele gemäß Fig. 5 und 6 kombiniert. Dadurch, dass das Mediengemisch in dem ersten Wärmetauscherabschnitt 5b bereits vorkondensiert wird, ist ein Großteil des zweiten Mediums aus dem Mediengemisch bereits abgetrennt. Das so vorgereinigte Mediengemisch wird über die erste Medienabführleitung 14 dem dritten Wärmetauscherabschnitt 56 zugeführt. In dem Gaskühler 56 kann eine verbesserte Gaskühlung des Mediengemischs mit dem kalten LOHC+ erfolgen. Das vorgewärmte LOHC+ wird dem Flüssig-Flüssig-Rekuperator 8b zugeleitet, wobei das in dem zweiten Wärmetauscherabschnitt 8b zusätzlich vorgewärmte LOHC+ in dem ersten Wärmetauscherabschnitt 5b zur Vorkühlung und/oder Vorkondensation des Mediengemischs verwendet wird.

Eine konkrete Ausgestaltung des Trennapparats 4b ist in Fig. 8 schematisch dargestellt. Der erste Wärmetauscherabschnitt 5b und der dritte Wärmetauscherabschnitt 56 sind in dem oberen Gehäusebereich des ersten Wärmetauscherabschnitt-Gehäuses 6 entlang der Gehäuselängsachse 9 hintereinander angeordnet. Entlang der Gehäuselängsachse 9 sind der erste Wärmetauscherabschnitt 5b und der dritte Wärmetauscherabschnitt 56 durch eine undurchlässige Trennwand 63 voneinander getrennt. Die Trennwand 63 erstreckt sich lediglich bereichsweise in einer Ebene senkrecht zur Gehäuselängsachse 9.

Ferner ist eine Durchlassöffnung vorgesehen, an der ein Tropfenentferner 62 angeordnet ist. Der Tropfenentferner 62 ist als Drahtgestrick mit einer Maschenweite von 20 µm ausführt. Der Tropfenentferner 62 kann auch als Metallfaservlies ausgeführt sein.

Das Mediengemisch, das dem ersten Wärmetauscherabschnitt 5b über die Mediengemisch-Leitung 3 zugeführt wird, kann LOHC- in Dampfform und/oder in Tröpfchenform enthalten, die in dem Gasgemisch mitgeführt werden. Zur Entfernung von Dampf und/oder Tröpfchen ist der Tropfenentferner 62 zwischen dem ersten Wärmetauscherabschnitt 5b und dem dritten Wärmetauscherabschnitt 56 angeordnet. Insbesondere stellt die Durchlassöffnung mit dem Tropfenentferner 62 die erste Medienabführleitung 14 dar, die den ersten Wärmetauscherabschnitt 5b mit dem dritten Wärmetauscherabschnitt 56 verbindet.

In dem dritten Wärmetauscherabschnitt 56 ist eine Kondensat-Ablaufschräge vorgesehen, die als Kondensatleitung 61 dient. Das Mediengemisch, das aus dem ersten Wärmetauscherabschnitt 5b durch den Tropfenentferner 62 in den dritten Wärmetauscherabschnitt 56 gelangt, kann noch kleinste Tröpfchen aufweisen, die über die Kondensatleitung 61 in den zweiten Wärmetauscherabschnitt 8b abgeleitet werden. Ferner kann im dritten Wärmetauscherabschnitt 56 gebildetes LOHC-Kondensat über die Kondensatleitung 61 in den zweiten Wärmetauscherabschnitt 8b gelangen. Bevor das gereinigte Mediengemisch den dritten Wärmetauscherabschnitt 56 über die zweite Medienabführleitung 60 verlassen und einer ersten Medienverwertungseinheit 15 zugeführt werden kann, muss das gereinigte Mediengemisch einen Aerosolabscheider 64 passieren, der gemäß dem gezeigten Ausführungsbeispiel ein Metallfaservlies mit einer Maschenweite von 0,1 µm aufweist.

Der Trennapparat 4b ermöglicht eine Vorkondensation des Mediengemischs in dem ersten Wärmetauscherabschnitt 5b. Der Anteil an dampfförmigen LOHC- in dem Mediengemisch wird dadurch reduziert. Durch den Tropfenentferner 62 erfolgt eine zuverlässige Tropfenentfernung aus dem Mediengemisch.

Das kalte LOHC+ kann in dem dritten Wärmetauscherabschnitt 56 einen wesentlichen Teil der Wärmemenge des vorkondensierten Wasserstoffgases aufnehmen. Dadurch ist eine besonders effektive Kühlung des Wasserstoffgases möglich. Das aus dem Trennapparat 4b abgegebenen Wasserstoffgases weist höchstens eine Temperatur von bis zu 20°K mehr als die Temperatur des zugeführten, kalten LOHC+ auf.

In dem Flüssig-Flüssig-Rekuperator 8b erfolgt eine verbesserte Wärmerekuperation von dem LOHC- auf das LOHC+.

Der zweite Wärmetauscherabschnitt 8b weist einen Sensor 65 zur Füllstandsüberwachung des Flüssigkeitspegels 66 auf. Der Sensor 65 kann auch über kommunizierende Röhren außerhalb des zweiten Wärmetauscherabschnitts 8b, insbesondere außerhalb des Trennapparats 4b, angeordnet sein. Die Füllstandüberwachung kann beispielsweise mittels eines kontinuierlich arbeitenden Sensors oder mittels einer Zweipunktregelung erfolgen.

Der Sensor 65 ist insbesondere mit einer nicht dargestellten Steuerungseinrichtung in Signalverbindung, insbesondere kabelgebunden oder kabellos. Wenn ein kritischer Füllstand des Kondensats von LOHC- in dem zweiten Wärmetauscherabschnitt 8b erreicht wird, wird die zweite Medienabführöffnung 38 geöffnet, um das Kondensat des LOHCaus dem Trennapparat 4b abzuführen und beispielsweise in einem zweiten MedienSpeicherbehälter 40 zu speichern. Es ist auch möglich, eine kontinuierliche Regelung durchzuführen, insbesondere mittels einer Zweipunktregelung im Überlauf.

Durch die kompakte Ausführung des Trennapparats 4b, in dem insbesondere drei Wärmetauscherabschnitte 5b, 8b und 56 integriert sind, und in dem insbesondere ein Kondensatabfall beinhaltet ist, wird eine besonders effektive Phasentrennung erzielt.

Der Gasanteil in dem Kondensat von LOHC- und der Tröpfchenanteil in dem abgeführten Wasserstoffgas ist zusätzlich reduziert.

Bei dem gezeigten Trennapparat 4b wird das kalte LOHC+ mit einer Temperatur von unter 40°C zugeführt und durch den mehrstufigen Wärmetauscherprozess mit einer Temperatur von über 295°C aus dem ersten Wärmetauscherabschnitt 5b abgeführt. Das Mediengemisch umfassend Wasserstoffgas und LOHC- wird mit einer Temperatur von über 200°C dem ersten Wärmetauscherabschnitt 5b zugeführt und verlässt den Trennapparat 4b im Bereich des dritten Wärmetauscherabschnitts 56 mit einer Temperatur von weniger als 60°C. Das in dem Trennapparat 4b kondensierte und im Bereich des zweiten Wärmetauscherabschnitts 8b gesammelte, verflüssigte LOHC- kann mit einer Temperatur von über 200°C aus dem Trennapparat 4b abgeführt werden.

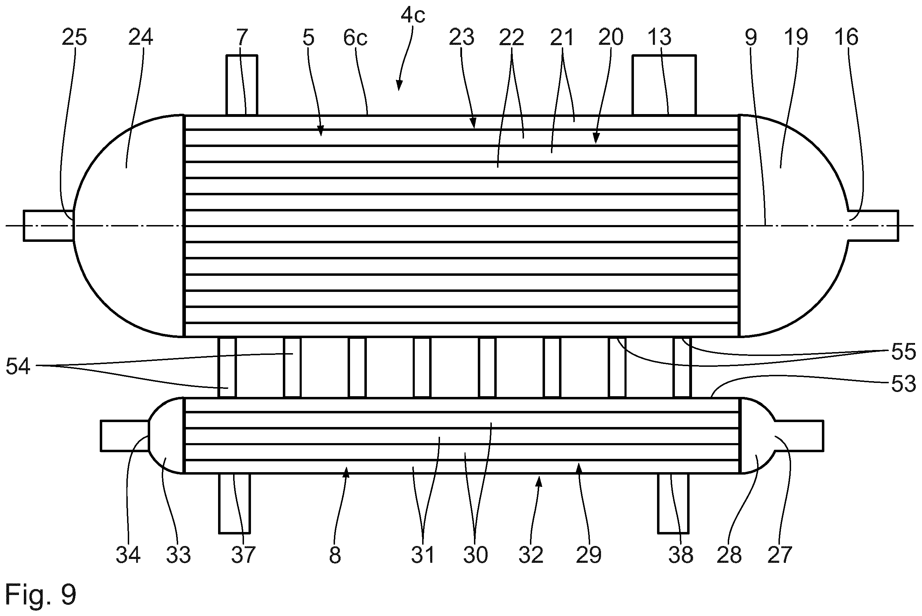

Im Folgenden wird unter Bezugnahme auf Fig. 9 ein viertes Ausführungsbeispiel der Erfindung beschrieben. Konstruktiv identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Der wesentliche Unterschied gegenüber dem ersten Ausführungsbeispiel besteht darin, dass der Trennapparat 4c zusätzlich zu dem ersten Wärmetauscherabschnitt-Gehäuse 6c ein zweites Wärmetauscherabschnitt-Gehäuse 53 aufweist, in dem der zweite Wärmetauscherabschnitt 8 integriert ausgeführt ist.

Wie in dem ersten Ausführungsbeispiel auch sind der erste Wärmetauscherabschnitt 5 und der zweite Wärmetauscherabschnitt 8 miteinander hydrostatisch verbunden. Da das erste Wärmetauscherabschnitt-Gehäuse 6c und das zweite Wärmetauscherabschnitt-Gehäuse 53 räumlich voneinander getrennt sind, ist mindestens eine und sind insbesondere mehrere, entlang der Gehäuselängsachse 9 beabstandet zueinander angeordnete, zweite Medium-Verbindungsleitungen 54 vorgesehen. Die zweite Medium-Verbindungsleitungen 54 weisen jeweils eine Durchgangsöffnung 55 auf. Durch die Durchgangsöffnungen 55 kann das zweite Medium aus dem ersten Wärmetauscherabschnitt 5 in den zweiten Wärmetauscherabschnitt 8 gelangen. Die zweiten Medium-Verbindungsleitungen 54 sind als vertikal orientierte Fallrohre ausgeführt, die als Abtropfkanal für das kondensierte zweite Medium dienen. Es ist denkbar, dass die zweiten Medium-Verbindungsleitungen 54 mit einer trichterförmigen Öffnung in das erste Wärmetauscherabschnitt-Gehäuse 6c münden, um eine rückstandslose Abführung des Kondensats des zweiten Mediums aus dem ersten Wärmetauscherabschnitt 5 in den zweiten Wärmetauscherabschnitt 8 zu gewährleisten.

Aufgrund der räumlichen Trennung des ersten Wärmetauscherabschnitts 5 und des zweiten Wärmetauscherabschnitts 8 ergibt sich auch eine räumliche Trennung der Strömungsumlenkelemente 46 und 49, die im Einzelnen in Fig. 9 nicht dargestellt sind. Wesentlich ist, dass sowohl die ersten Strömungsumlenkelemente 46 als auch die zweiten Strömungsumlenkelemente 49 jeweils Durchgangsöffnungen 47 bzw. 50 für die Wärmetauscherrohre 21 bzw. 30 aufweisen. Zusätzlich weist jedes der Strömungsumlenkelemente 46, 49 jeweils einen Freigabebereich 48 bzw. 51 auf, um eine gerichtete Strömungsumlenkung des jeweiligen Fluids in dem ersten Wärmetauscherabschnitt 5 bzw. dem zweiten Wärmetauscherabschnitt 8 zu erzwingen.

## Patentansprüche

1. Verfahren zum Bereitstellen von Wasserstoff umfassend die Verfahrensschritte,
- Dehydrieren eines zumindest teilweise beladenen Wasserstoffträgermediums in einem Dehydrierreaktor (2), wobei das zumindest teilweise beladene Wasserstoffträgermedium Benzyltoluol und/oder Dibenzyltoluol als Reinstoff, isomere Gemische oder Mischungen davon ist,
- Abführen eines Mediengemischs mit Wasserstoffgas und mit zumindest teilweise entladenem Wasserstoffträgermedium aus dem Dehydrierreaktor (2),
- Trennen des Mediengemischs umfassend die Verfahrensschritte
-- Zuführen des Mediengemischs in einen ersten Wärmetauscherabschnitt (5; 5a; 5b) eines Trennapparats (4; 4a; 4b; 4c), wobei das zumindest teilweise entladene Wasserstoffträgermedium zumindest teilweise dampfförmig ist,
-- Zuführen eines Wärmetauschermediums, das ein Wasserstoffträgermedium ist, in den ersten Wärmetauscherabschnitt (5; 5a; 5b) des Trennapparats (4; 4a; 4b; 4c),
-- Übertragen von Wärme von dem Mediengemisch auf das Wärmetauschermedium und dadurch
--- Erwärmen des Wärmetauschermediums,
**---** Abkühlen des Wasserstoffgases und
--- zumindest teilweises Kondensieren des zumindest teilweise entladenen Wasserstoffträgermediums,
-- Abtrennen des kondensierten zumindest teilweise entladenen Wasserstoffträgermediums von dem Wasserstoffgas,
wobei das vorgewärmte Wärmetauschermedium aus dem Trennapparat (4; 4a; 4b; 4c) als zumindest teilweise beladenes Wasserstoffträgermedium zum Dehydrieren dem Dehydrierreaktor (2) zugeführt wird,
wobei das Verfahren ferner umfasst ein Übertragen von Wärme in einem zweiten Wärmetauscherabschnitt (8; 8a; 8b) von dem zumindest teilweise entladenen Wasserstoffträgermedium auf das Wärmetauschermedium und dadurch zusätzliches Er-
wärmen des Wärmetauschermediums und Abkühlen des zumindest teilweise entladenen Wasserstoffträgermediums,
wobei das in dem ersten Wärmetauscherabschnitt (5) erwärmte Wärmetauschermedium einem zweiten Wärmetauscherabschnitt (8) oder das in einem zweiten Wärmetauscherabschnitt (8a; 8b) erwärmte Wärmetauschermedium dem ersten Wärmetauscherabschnitt (5a; 5b) zugeführt wird.

2. Verfahren gemäß Anspruch 1, **gekennzeichnet durch** Zuführen des kondensierten zumindest teilweise entladenen Wasserstoffträgermediums in einen zweiten Wärmetauscherabschnitt (8; 8a; 8b) des Trennapparats (4; 4a; 4b; 4c).

3. Verfahren gemäß einem der vorstehenden Ansprüche, **dadurch gekennzeichnet, dass** das Mediengemisch mit einer Gemisch-Zuführtemperatur von mehr als 250°C und/oder das Wärmetauschermedium mit einer ersten Wärmetauscher-Zuführtemperatur von weniger als 30°C dem Trennapparat (4; 4a; 4b; 4c) zugeführt wird.

4. Verfahren gemäß einem der vorstehenden Ansprüche, **dadurch gekennzeichnet, dass** das Wasserstoffgas mit einer ersten Medium-Abführtemperatur von weniger als 40°C und/oder das zumindest teilweise entladene Wasserstoffträgermedium mit einer zweiten Medium-Abführtemperatur von weniger als 200°C aus dem Trennapparat (4; 4a; 4b; 4c) abgeführt wird.

## Claims

1. A method for providing hydrogen comprising the process steps,
- dehydrogenating an at least partially loaded hydrogen carrier medium in a dehydrogenation reactor (2), wherein the at least partially loaded hydrogen carrier medium is benzyltoluene and/or dibenzyltoluene as pure substances, isomeric mixtures, or mixtures thereof,
- discharging a mixture of hydrogen gas and at least partially unloaded hydrogen carrier medium from the dehydrogenation reactor (2),
- separating the media mixture, comprising the method steps of
-- feeding the media mixture into a first heat exchanger section (5; 5a; 5b) of a separating apparatus (4; 4a; 4b; 4c), wherein the at least partially discharged hydrogen carrier medium is at least partly vaporous,
-- feeding a heat exchanger medium, which is a hydrogen carrier medium, into the first heat exchanger section (5; 5a; 5b) of the separating apparatus (4; 4a; 4b; 4c),
-- transferring heat from the media mixture to the heat exchanger medium and as a result
--- heating the heat exchanger medium,
--- cooling the hydrogen gas and
--- at least partly condensing the at least partially unloaded hydrogen carrier medium,
-- separating the condensed at least partially unloaded hydrogen carrier medium from the hydrogen gas,
wherein the preheated heat exchanger medium is fed from the separation apparatus (4; 4a; 4b; 4c) as an at least partially loaded hydrogen carrier medium to the dehydrogenating reactor (2) for the dehydrogenation,
wherein the method further comprises transferring heat in a second heat exchanger section (8; 8a; 8b) from the at least partially unloaded hydrogen carrier medium to the heat exchanger medium, thereby additionally heating the heat exchanger medium and cooling the at least partially unloaded hydrogen carrier medium,
wherein the heat exchange medium heated in the first heat exchanger section (5) is fed to a second heat exchanger section (8), or the heat exchange medium heated which has been heated in a second heat exchanger section (8a; 8b) is fed to the first heat exchanger section (5a; 5b).

2. The method as claimed in claim 1, **characterized by** feeding the condensed at least partially unloaded hydrogen carrier medium into a second heat exchanger section (8; 8a; 8b) of the separating apparatus (4; 4a; 4b; 4c).

3. The method as claimed in any of the preceding claims, **characterized in that** the media mixture is fed to the separating apparatus (4; 4a; 4b; 4c) at a mixture feed temperature of more than 250°C and/or the heat exchanger medium is fed to the separating apparatus (4; 4a; 4b; 4c) at a first heat exchanger feed temperature of less than 30°C.

4. The method as claimed in any of the preceding claims, **characterized in that** the hydrogen gas is discharged from the separating apparatus (4; 4a; 4b; 4c) at a first medium discharge temperature of less than 40°C and/or the at least partially discharged hydrogen carrier medium is discharged from the separating apparatus (4; 4a; 4b; 4c) at a second medium discharge temperature of less than 200°C.

## Revendications

1. Procédé de production d'hydrogène comprenant les étapes de procédé de
- déshydratation d'un milieu porteur d'hydrogène au moins partiellement chargé dans un réacteur de déshydratation (2), dans lequel le milieu porteur d'hydrogène au moins partiellement chargé est du benzyltoluène et/ou du dibenzyltoluène sous forme de matière pure, de mélanges d'isomères ou de panachages de ceux-ci,
- évacuation d'un mélange de milieux avec de l'hydrogène gazeux et avec un milieu porteur d'hydrogène au moins partiellement déchargé à partir du réacteur de déshydratation (2),
- séparation du mélange de milieux comprenant les étapes de procédé de
-- amenée du mélange de milieux dans une première section d'échangeur de chaleur (5 ; 5a ; 5b) d'un séparateur (4 ; 4a ; 4b ; 4c), dans lequel le milieu porteur d'hydrogène au moins partiellement déchargé est au moins partiellement sous forme de vapeur,
-- amenée d'un milieu échangeur de chaleur qui est un milieu porteur d'hydrogène dans la première section d'échangeur de chaleur (5 ; 5a ; 5b) du séparateur (4 ; 4a ; 4b ; 4c),
-- transmission de chaleur du mélange de milieux vers le milieu échangeur de chaleur et par conséquent
--- chauffage du milieu échangeur de chaleur,
--- refroidissement de l'hydrogène gazeux, et
--- condensation au moins partielle du milieu porteur d'hydrogène au moins partiellement déchargé,
-- séparation du milieu porteur d'hydrogène au moins partiellement déchargé condensé de l'hydrogène gazeux,
dans lequel le milieu échangeur de chaleur préchauffé est amené du séparateur (4 ; 4a ; 4b ;4c) sous la forme de milieu porteur d'hydrogène au moins partiellement chargé pour la déshydrogénation vers le réacteur de déshydrogénation (2),
le procédé comprenant en outre une transmission de chaleur dans une deuxième section d'échangeur de chaleur (8 ; 8a ; 8b) à partir du milieu porteur d'hydrogène au moins partiellement déchargé vers le milieu échangeur de chaleur et par conséquent chauffage supplémentaire du milieu échangeur de chaleur et refroidissement du milieu porteur d'hydrogène au moins partiellement déchargé, dans lequel le milieu échangeur de chaleur réchauffé dans la première section d'échangeur de chaleur (5) est amené vers une deuxième section d'échangeur de chaleur (8) ou le milieu échangeur de chaleur réchauffé dans une deuxième section d'échangeur de chaleur (8a ; 8b) est amené vers la première section d'échangeur de chaleur (5a ; 5b).

2. Procédé selon la revendication 1, **caractérisé par** l'amenée du milieu porteur d'hydrogène au moins partiellement déchargé condensé dans une deuxième section d'échangeur de chaleur (8 ; 8a ; 8b) du séparateur (4 ; 4a ; 4b ; 4c).

3. Procédé selon l'une des revendications précédentes, **caractérisé en ce que** le mélange de milieux est amené avec une température d'amenée de milieu supérieure à 250 °C et/ou le milieu échangeur de chaleur est amené avec une première température d'amenée d'échangeur de chaleur inférieure à 30 °C vers le séparateur (4 ; 4a ; 4b ; 4c).

4. Procédé selon l'une des revendications précédentes, **caractérisé en ce que** l'hydrogène gazeux est évacué avec une première température d'évacuation de milieu inférieure à 40 °C et/ou le milieu porteur d'hydrogène au moins partiellement déchargé est évacué avec une deuxième température d'évacuation de milieu inférieure à 200 °C à partir du séparateur (4 ; 4a ; 4b ; 4c).
